# EUROPEAN PATENT SPECIFICATION

(11) **EP 2 626 577 B1**
(45) Date of publication and mention of the grant of the patent: **14.11.2018**
(21) Application number: 12154935.6
(22) Date of filing: 10.02.2012
(51) Int. Cl.: F16C 33/10

(54) **Method for controlling a wind turbine and wind turbine**
Verfahren zum Steuern einer Windturbine und Windturbine
Procédé de commande d'éolienne et agencement d'éolienne

(43) Date of publication of application: 14.08.2013
(73) Proprietor: Siemens Aktiengesellschaft, 80333 München (DE)
(72) Inventor: Pedersen, Bo, 7620 Lemvig (DK); Thomsen, Kim, 7430 Ikast (DK)

(56) References cited:
- WO-A2-2011/003482
- DE-A1-102010 019 535
- US-A- 3 107 129
- US-A- 4 322 116
- US-A1- 2004 055 825
- US-A1- 2011 188 988
- US-B1- 8 079 761

## Description

The present invention relates in general to a wind turbine with a plain/sliding bearing. In particular, the present invention is directed to control the bearing of the wind turbine.

Future generations of multi MW size direct drive (DD) wind turbines may start to use plain/sliding bearings due to the fact that the current rolling element bearing systems cannot provide adequate lifetime and robustness. One disadvantage with plain/sliding bearings is the operational envelope before full hydrodynamic [HD] film is reached and the bearing surfaces are fully separated by an oil film. In the region of operation before full film separation there will be partially contact leading to wear and friction. Furthermore, when an element with friction contact is moved from standstill to motion, the stiction (static start/stop friction) is high. The stick-slip phenomenon which describes the spontaneous jerking motion that can occur while two objects are sliding over each other can also be a problem.

DE 10 2010 019 535 A1 discloses a wind turbine having a segmented plain/sliding bearing and actuators for adjusting the pressure of lubrication in the bearing in order to avoid contacts between the shaft and the bearing-seat.

US 3,107,129 deals with a gas lubricated bearing system that allows changing between a hydrodynamic and a hydrostatic mode of operation.

It is therefore an object of the present invention to improve the operation of plain/sliding bearings in wind turbines.

This object is solved by the features of claim 1 and 4, respectively. The dependent claims offer further details and advantages of the invention.

In a first aspect the invention is directed to a method for controlling a wind turbine with a plain/sliding bearing and bearing lubrication means, comprising the steps of:
- Operating the bearing as a hydrodynamic bearing in normal operation; and
- Operating the bearing as a hydrostatic bearing when the friction of the bearing reaches a threshold.

The term bearing lubrication means encompasses a simple lubricant like for example oil as well as a complete system with pipes, a pump and/or a reservoir for the lubricant.

The present invention employs intelligent and controlled hydrostatic (HS) jacking. The hydrodynamic (HD) bearing with HS support system can be controlled intelligently by the wind turbine control system based on the characteristics of the actual turbine loading and production, lubricant conditions, operating and/or maintenance status. Additionally, the bearing conditions can be monitored. Followed and unplanned maintenance or maintenance can be avoided by a feedback loop to the controller.

With the setup of sensors and measurements in a HD bearing, it can through a feedback loop to the turbine controller, change the conditions and improve a HD bearing performance. This condition measuring can be based on feedback from the bearing adjusted through an open loop regulation. Therefore it is possible to monitor the bearing performance and conditions to optimize and schedule maintenance, replacement and/or rework of sliding surfaces on the right time.

When a turbine has been exposed to many start-ups and run/shut-down operations with a certain level of tear and wear it will have an impact on surface finish, tolerances, heat generation, bearing clearance and/or bearing performance. If the wear should exceed design limits the load capacity will decrease and the bearing will fail. With the intelligent HS system the load capacity of the bearing can be increased and hereby the bearing can operate until service can be performed.

If a turbine with a HD bearing is controlled and pressurised with hydrostatic support during the whole operation range from start-up, partly in full operation and run/shut-down it will also be possible to run the turbine with a damaged or worn bearing. To operate and run in fault mode can be done if the conditions are controlled, monitored and adjusted with different pressure in the bearing and some additional advantage can be obtained, caused by some failure modes.

During start-up and run/shut-down a HD bearing need to be pressurised with hydrostatic lubrication in order to reduce stiction and to minimizes tear and wear. This increases the life time of the bearing.

The invention discloses a system for start-up, operation, shut-down and the monitoring of a wind turbine with a sliding bearing. The main bearings in a wind turbine are highly loaded at standstill. The present invention overcomes the high load with a corresponding high friction at start-up. With the inventive wind turbine main bearing it is possible to boost the load carrying capacity if external loads increase or damages occur in sections of the bearing.

For the hydrostatic operation the lubrication of the bearing can be pressurised and/or the temperature of the bearing can be controlled. With enhanced pressure of the lubricant the mode of operation of the bearing can be switched from hydrostatic (HS) operation to hydrodynamic (HD) operation. In other words, the bearing can be operated as a hydrodynamic device. With enhanced pressure of the lubricant is it not only possible to change or adapt the mode of operation but to adjust the bearing inside a mode of operation as well for example when a failure occurs.

The friction may be determined by measuring pressure, temperature and/or film thickness of the bearing or by parameters of a wind turbine controller. High friction occurs usually at start-up and shut-down as no full film is yet present. Too high load, wear of sliding surfaces (indirect measure of reduced bearing performance), too high temperature and drop in viscosity (indirect measure of reduced bearing performance), particles in the oil (a thicker film is needed), too low film thickness (indirect measure of reduced bearing performance) and/or wind forecasts indicating strong gust (or similar high load weather approaching) can also lead to high friction or a forecast of high friction.

According to the invention stiffness and damping of the turbine and driveline components are adjusted. The turbine and driveline components stiffness and damping are changed and optimized by adjusting the pressure in the oil film and thus changing the natural frequency and dynamic response of the system, i.e. the turbine and driveline components. Hereby unwanted eigenfrequencies can be avoided.

In a further aspect the invention is directed to a wind turbine with a plain/sliding bearing and a bearing lubricant, comprising a pressure unit for controlling the pressure of the lubricant and a controller connected to the pressure unit adapted for control of operation of the bearing as a hydrodynamic bearing and/or as a hydrostatic bearing. The same advantages and modifications as described above apply here as well. The pressure unit may for example be a pump for pressurising and/or circulating the lubricant. The controller may be implemented in hardware and/or in software. The controller can be a distinct unit or it can be integrated into existing controllers or computers like the wind turbine controller.

The controller may comprise inputs for actual turbine load and production, bearing and lubricant conditions and/or operating and maintenance status and wherein the controller may be adapted to generate an output for the pressure unit based upon the inputs. These and more inputs or signals can be used by feedback and/or open loop regulation of the controller to generate an output or signal for controlling the pressure unit and/or a temperature unit.

The wind turbine may comprise an energy storage with a pressure reservoir for the lubricant. The hydrostatic pressurising systems may be supported by some kind of energy supply or energy storage or a forced driven system to ensure the pressurising function even if the turbine is without power connection or grid connection.

The wind turbine may comprise a temperature unit for controlling the temperature of the bearing, wherein the temperature unit is connected to the controller. Due to wear, the lubrication film in the bearing, the changing of the temperature of the rings and retainer (consisting of outer ring and inner ring) will change the clearance for the lubrication film which can be countered by a temperature unit like a heating and/or cooling system. But it can maybe also be done manually by adjustment screws, during service or maintenance. The temperature unit can be part of the pressure unit.

The wind turbine may comprise a sensor for measuring pressure, temperature and/or film thickness of the lubricant in the bearing. This or these sensors allow precise and fast measurement of the conditions of the bearing and/or the lubricant. Accordingly, the controller can react precisely to changing conditions.

The sensor may be are arranged in the area of a lubricant inlet of the bearing. One or more pads or pockets can be arranged in a sliding surface of the inner ring and/or the outer ring to allow the lubricant to enter the bearing. Inside the pads the sensor can be arranged very close to the film of lubricant inside the bearing.

The accompanying drawings are included to provide a further understanding of embodiments. Other embodiments and many of the intended advantages will be readily appreciated as they become better understood by reference to the following detailed description. The elements of the drawings do not necessarily scale to each other. Like reference numbers designate corresponding similar parts.
Fig. 1 illustrates a schematic view of the bearing and the lubrication system of a wind turbine according to the invention.
Fig. 2 illustrates a diagram of the friction coefficient of the bearing according to the invention.
Fig. 3 illustrates a Stribeck curve of the bearing according to the invention.
Fig. 4 illustrates a diagram of the operational modes of the bearing according to the invention.
Figs. 5 and 6 illustrate a further Stribeck curve of the bearing operating outside its normal operating condition according to the invention.

In the following detailed description, reference is made to the accompanying drawings which form a part hereof and in which are shown by way of illustration specific embodiments in which the invention may be practised. In this regard, directional terminology, such as "top" or "bottom" etc. is used with reference to the orientation of the Figure(s) being described. Because components of embodiments can be positioned in a number of different orientations, the directional terminology is used for purposes of illustration and is in no way limiting. It is to be understood that other embodiments may be utilized and structural or logical changes may be made without departing from the scope of the present invention. The following detailed description, therefore, is not to be taken in a limiting sense, and the scope of the present invention is defined by the appended claims.

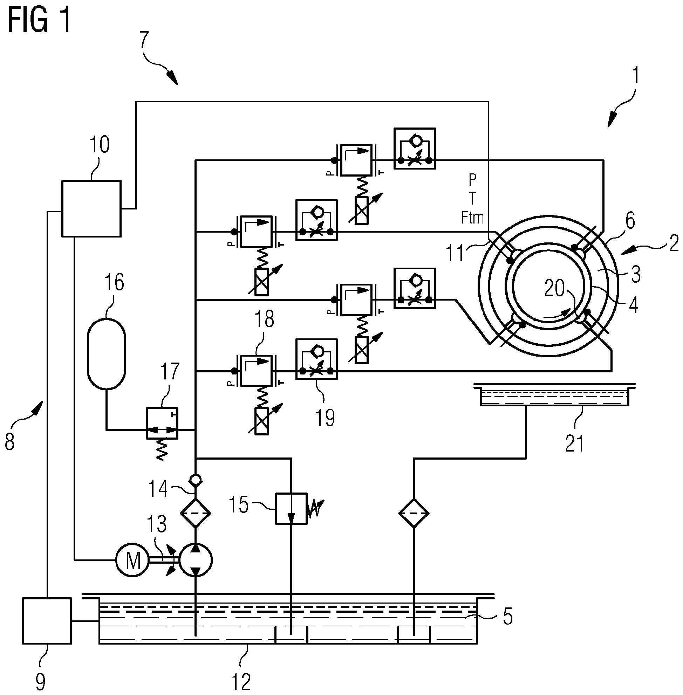

Figure 1 shows a wind turbine 1 with a plain/sliding bearing 2. The bearing 2 has an outer ring 3 to which a rotor hub of the wind turbine 1 is connected (not shown for the sake of clarity). An inner ring 4 is arranged inside the outer ring 3. The inner ring 4 is attached to a shaft of the wind turbine 1 (not shown for the sake of clarity). Between the two rings a lubricant 5 is present to reduce or eliminate friction between the two rings. The rotor could alternatively be connected to the inner ring 4.

A housing 6 surrounds the outer ring 3 for example for stability. In another design the housing 6 could be the outer ring and the outer ring 3 could be a bushing which provides the bearing surface.

A bearing lubrication means 7 provides the lubricant 5. The bearing lubrication means 7 has a pressure unit 8 for pressurising and or circulating the lubricant 5.

A temperature unit 9 controls the temperature of the bearing 2 and/or of the lubricant 5. This can be done by controlling the bearing 2 directly i.e. by heating and/or cooling the inner ring 4 and/or outer ring 3 or by heating and/or cooling the lubricant 5 as depicted.

A controller 10 is connected or in communication with the pressure unit 8 and the temperature unit 9. Four sensors 11 are arranged inside the bearing 2 for measurement of pressure, temperature and/or film thickness of the lubricant 5 in the bearing 2. The number of sensors 11 can vary depending on the application and the preciseness wanted. The sensors 11 are connected to the controller 10 as well. For the sake of clarity only one connection between the sensor 11 and the controller 10 is shown. However, all sensors 11 are connected to the controller 10.

The controller 10 receives signals from the sensors 11 and/or from further units like the wind turbine controller (not shown). Based on the information or inputs the controller 10 calculates set points or curves for the pressure and/or temperature of the lubricant 5 and/or the bearing 2. Respective outputs are generated and communicated to the pressure unit 8 and/or the temperature unit 9.

Now, the bearing lubrication means or system 7 is explained in greater detail. A reservoir 12 serves for supplying the lubricant 5. The temperature unit 9 for heating up or cooling down the lubricant 5 is located at the reservoir 12. Alternatively, it can be located close to or at the bearing 2. A pump 13 extracts the lubricant 5 out of the reservoir 12 into a pipe system.

A check valve 14 is located behind the pump 13. A drain valve 15 is arranged in parallel to the pump 13 and the check valve 14 in order to allow to empty out the lubricant 5 of the pipe system into the reservoir 12.

Further behind the pump 13, a pressure reservoir 16 like a tank for the lubricant 5 is arranged. When the pump 13 is operated a bidirectional valve 17 in front of the pressure reservoir 16 is opened to let lubricant 5 enter the pressure reservoir 16 where it is stored with a certain pressure. Then the valve 17 is closed. The pressure is high enough to allow a start of the system without operating the pump by opening the valve 17. The size of the pressure reservoir 16 can be sufficient to support several starts.

Four similar or identical lines extend in parallel to the bearing 2. A solenoid operated control valve 18 controls the pressure and/or flow of lubricant 5 which is fed to the bearing 2. Behind the control valve 18 another check valve 19 is arranged. The line ends in a lubricant inlet 20 in the outer ring 3, inner ring 4 or bushing. The inlet 20 can have a pad or pocket. The four inlets 20 are arranged symmetrically along the circumference. A sump 21 underneath the bearing 2 collects the lubricant 5 and delivers it back to the reservoir 12.

Inside the inlets 20 the sensors 11 are arranged for measuring pressure, temperature and/or film thickness of the lubricant 5 in the bearing 2. The signals of the sensors 11 are fed to the controller 10 where they are analysed and utilized together with further inputs for example from the wind turbine controller to steer or control the pressure unit 8, the pump 13 and the temperature unit 9. The further inputs can account for actual turbine load and production, bearing and lubricant conditions and/or operating and maintenance status.

The bidirectional valve 17 and the control valves 18 can be controlled as well. The pressure of the lubricant 5 inside the bearing 2 is controlled by the controller 10 via the control valves 18, the pump 13 and/or the pressure reservoir 16. The term pressure unit 8 can encompass the pump 13, the pressure reservoir 16, the bidirectional valve 17 and/or the control valve(s) 18.

As a backup or in normal operation as well the valves can also be controlled mechanically. The valves allow a proportional pressure and flow control.

In the following, operation of the system is described. In short, due to insufficient lubrication film during start-stop the bearing 2 will be exposed to wear, especial at low rpm with low sliding speed without full separation of the sliding surfaces. To monitor and compensate for this wear and to predict and forecast remaining time to services a combination of the following can be used: Feedback of the actual wear by direct measurement during operation in the lifetime, through pressure, temperature and film thickness measurements from the bearing 2 and direct wear measurements and on the other hand, open loop adjusting of the clearance for the lubrication film by controlling the temperature and pressure of the lubricant 5 and/or rings 3, 4 in the bearing 2.

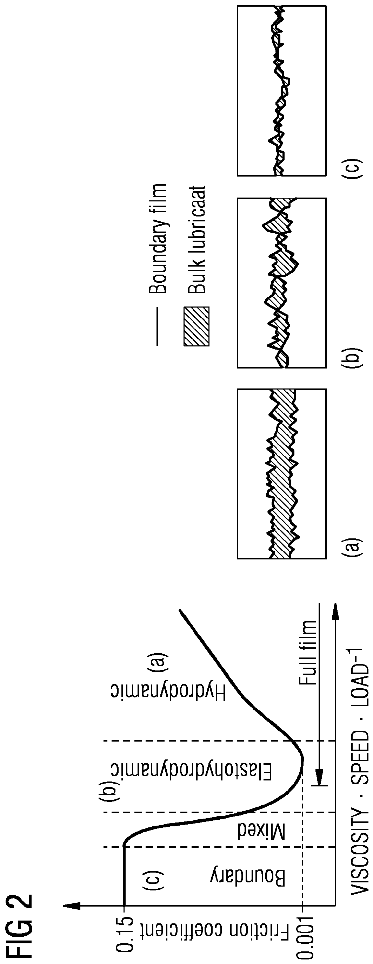

Figure 2 shows a diagram of the friction coefficient of the bearing versus viscosity/speed. A start-up situation usually comprises an insufficient thickness of the lubricant film between shaft and bearing. This situation is depicted in phase (c) and partly in phase (b). Under these conditions, the bearing surfaces make partial contact with each other during the sliding process. This can happen during start-up, slow speed of operation or if the bearing is damaged or the bearing load is higher than expected. The predominant effect is boundary lubrication where performance depends essentially on boundary film and surface finish.

In phase (b) partial lubrication (mixed) is predominant, both bulk lubricant and boundary film play a role. After full film has been reached the operation of the bearing changes from hydrostatic (HD) to hydrodynamic (HD) operation or in other words the hydrostatic bearing becomes a hydrodynamic bearing. This phase (a) comprises a full, thick fluid film lubrication where the surfaces are separated by bulk lubricant film. The film conditions are required for lubrication. When entering the full film area, there are no contacts between the surfaces and the HD effect is obtained based on film shear forces and a hydrodynamic lift is build.

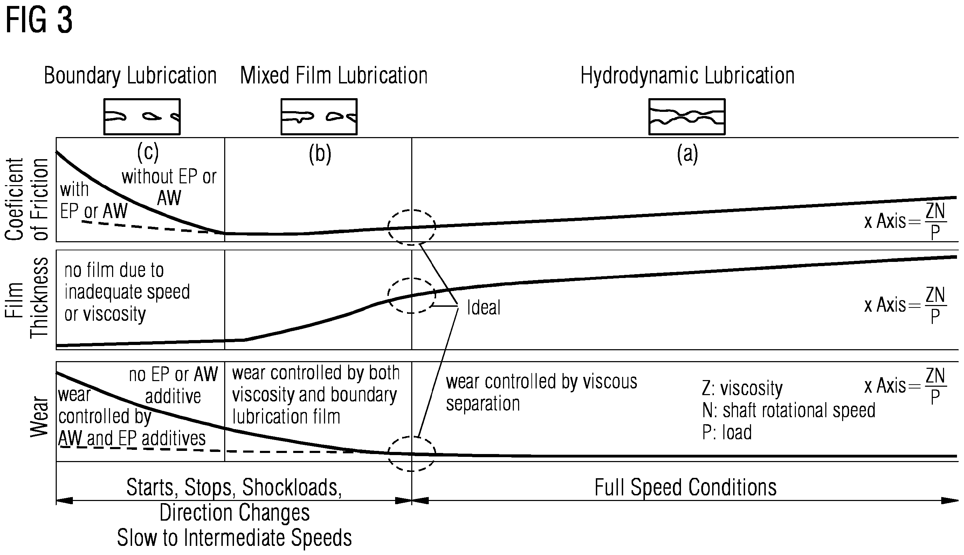

Figure 3 shows a standard Stribeck curve with friction, wear, film thickness and rpm relations in the same three phases (a), (b) and (c) as in Figure 2.

The phases (c) and (b) occur at starts, stops, shock loads, direction changes, slow to intermediate speeds of the bearing 2 or the wind turbine 1. Phase (a) occurs at normal operation or full speed conditions. It can be seen that during phase (c) when no film is built up due to inadequate speed or viscosity friction and wear is high. Friction and wear can be reduced by EP or AW additives (dashed line).

When going towards mixed film lubrication in phase (b) friction and wear decrease with an increasing film thickness. With hydrodynamic lubrication in phase (a) wear is minimised. An ideal point of operation could be at the transition between phase (b) to (a).

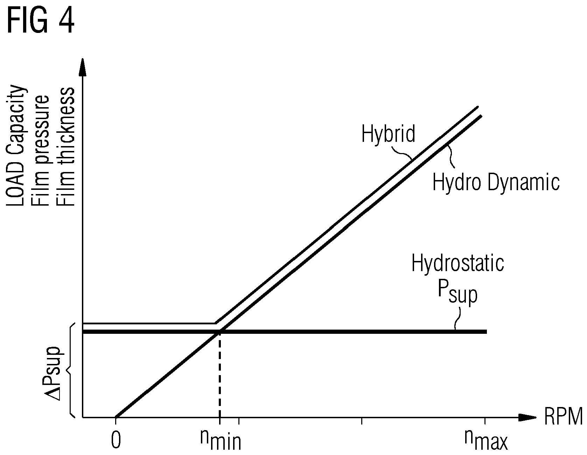

Figure 4 shows the load capacity, film pressure and thickness versus rpm. A standard HD design plain/sliding bearing starts with a film thickness of zero at zero rpm and increases proportionally with increasing rpm. An HS design has a constant film thickness, film pressure and load capacity due to the pressurised lubricant (ΔPsup). The bearing 2 according to the invention is a combination of HD and HS operation named a hybrid bearing. Here, the lubricant is pressurised (ΔPsup) during start-up, partly in full operation or only if necessary and during run/shut-down. Then a minimum load carrying capacity is ensured and supplied by a pump function, defined by the static pressure (ΔPsup).

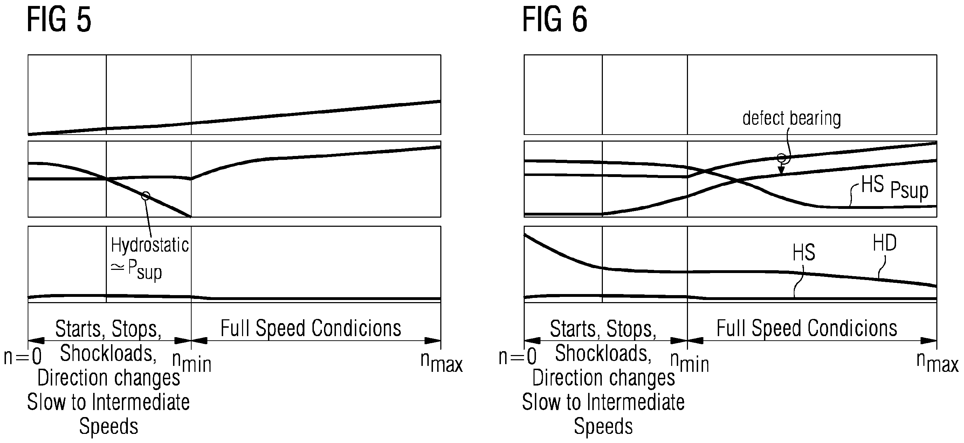

Figures 5 and 6 show Stribeck curves with friction, wear, film thickness and rpm relations for a hybrid bearing.

In Figure 5, the lubricant 5 is pressurised from the start of the wind turbine 1 leading to sufficient film thickness at start-up with zero rpm. This ensures separation of the sliding surfaces resulting in low wear and friction. The decreasing line (ΔPsup) in the left middle field (film thickness) shows the necessary pressure which is decreasing with increasing rpms.

Figure 6 shows operation for a HD bearing which is worn or otherwise operating outside its normal operating conditions. Thus, it will have reduced load carrying capacity. It is possible to extend the HS area, from slow speed to intermediate to increase load capacity compared to a pure HD bearing. This could be relevant for a bearing operating in a fault mode with strongly reduced performance. Then the impact can be minimized by controlling the pressurized area in different speeds. This can be seen by the lines in the middle field of film thickness. The line starting at zero in the left is the film thickness for a defect HD bearing resulting in an increased wear (upper line in lower field wear). By pressurising the lubricant 5 (HS Psup) (line in middle field film thickness) the film thickness can be increased (line above) so that the wear can be reduced significantly (lower line in lower field wear).

The hybrid bearing 2 can be controlled to overcome drawbacks of pure HS and HD bearings as well as to compensate for wear and/or failures.

A failure mode can for example be triggered due to too high load, wear of sliding surfaces (indirect measure of reduced bearing performance), too high temperature and drop in viscosity (indirect measure of reduced bearing performance), particles in the oil and a thicker film is needed, too low film thickness (indirect measure of reduced bearing performance) and/or wind forecasts indicating strong gust or similar high load weather approaching.

The system also comprise a back-up system to ensure sufficient pressure and flow of the lubricant 5 with or without grid connection. The back-up system includes the pressure unit 8.

With a grid connection and powered the operation is as follows:
With the hydrostatic system at start: Injection of pressurised lubricant 5 to make a lift of the sliding surfaces in the bearing 2 until the bearing 2 has enough sliding speed (have built the film) and to move into the HD area.

At the same time the pressure reservoir 16 is pressurised and loaded and the valve is closed. This can support HS start-up, where pressurized lubrication is stored in the reservoir 16 to support a number of start-ups.

Then the HS pressure can be reduced and the HD operation will take over.

The pressure unit or system 8 is ready to release pressure if the turbine shuts down or starts up or when the grid disappears.

This system can also be used for changing the stiffness and damping (dynamic response) thus reducing vibration in the bearing 2 and the whole revolving system. The adjustment of the dynamic response of the bearing 2 is done by adjusting the pressure in the oil film and thus changing the natural frequency and dynamic response of the system and thereby the turbine and driveline components stiffness and damping.

For a periodic overrating and/or on sites with very high turbulence extra pressure can be supplied to support power peaks and to increase load carrying capacity.

Without qrid connection the operation is as follows:
An electrical battery supply (UPS), the pressure unit 8 and/or other energy storage system is used to perform a number of starts.

A forced driven pump system can be utilised: The pressurising system is turned when the rotor starts to turn and then forces to drive a pump system. This does however not allow for HS lifting before starting the bearing.

## Claims

1. Method for controlling a wind turbine (1) with a plain/sliding bearing (2) and bearing lubrication means (7), comprising the steps of:
- Operating the bearing (2) as a hydrodynamic bearing (HD) in normal operation; and
- Operating the bearing (2) as a hydrostatic bearing (HS) when the friction of the bearing (2) reaches a threshold, wherein stiffness and damping of the turbine and driveline components are adjusted by adjusting the pressure in an oil film provided by the bearing lubrication means (7) thus changing a natural frequency and a dynamic response of the turbine and driveline components.

2. Method according to claim 1, wherein for the hydrostatic operation the lubrication of the bearing (2) is pressurised and/or the temperature of the bearing (2) is controlled.

3. Method according to claim 1 or 2, wherein the friction of the bearing (2) is determined by measuring pressure, temperature and/or film thickness of the bearing (2).

4. Wind turbine for carrying out a method defined by one of the claims 1 to 3 with a plain/sliding bearing (2) and a bearing lubricant (5), comprising a pressure unit (8) for controlling the pressure of the lubricant (5) and a controller connected to the pressure unit (8) adapted for control of operation of the bearing (2) as a hydrodynamic bearing and as a hydrostatic bearing, **characterised in that** the pressure unit (8) is further adapted to adjust stiffness and damping of the turbine and driveline components by adjusting the pressure in the oil film provided the bearing lubrication means (7) thus changing a natural frequency and a dynamic response of the turbine and driveline components.

5. Wind turbine according to claim 4, wherein the controller (10) comprises inputs for actual turbine load and production, bearing and lubricant conditions and/or operating and maintenance status and wherein the controller (10) is adapted to generate an output for the pressure unit (8) based upon the inputs.

6. Wind turbine according to claim 4 or 5, comprising an energy storage with a pressure reservoir (16) for the lubricant (5) .

7. Wind turbine according to at least one of claims 4 to 6, comprising a temperature unit (9) for controlling the temperature of the bearing (2), wherein the temperature unit (9) is connected to the controller (10).

8. Wind turbine according to at least one of claims 4 to 7, comprising a sensor (11) for measuring pressure, temperature and/or film thickness of the lubricant (5) in the bearing (2) .

9. Wind turbine according to claim 8, wherein the sensor (11) is arranged in the area of a lubricant inlet(20) of the bearing (2).

## Patentansprüche

1. Verfahren zum Steuern einer Windturbine (1) mit einem Gleitlager (2) und einem Lagerschmiermittel (7), das folgende Schritte umfasst:
- Betreiben des Lagers (2) als hydrodynamisches Lager (HD) bei normalem Betrieb und
- Betreiben des Lagers (2) als hydrostatisches Lager (HS), wenn die Reibung des Lagers (2) einen Grenzwert erreicht, wobei Steifigkeit und Dämpfung der Turbinen- und Antriebsstrangkomponenten durch Einstellen des Drucks eines Ölfilms eingestellt werden, der von dem Lagerschmiermittel (7) bereitgestellt wird, so dass sich eine Eigenfrequenz und ein dynamisches Verhalten der Turbinen- und Antriebsstrangkomponenten ändert.

2. Verfahren nach Anspruch 1, wobei die Schmierung des Lagers (2) für den hydrostatischen Betrieb unter Druck erfolgt und/oder die Temperatur des Lagers (2) geregelt wird.

3. Verfahren nach Anspruch 1 oder 2, wobei die Reibung des Lagers (2) durch Messen von Druck, Temperatur und/oder Filmdicke am Lager (2) ermittelt wird.

4. Windturbine zum Ausführen eines Verfahrens nach einem der Ansprüche 1 bis 3 mit einem Gleitlager (2) und einem Lagerschmiermittel (5), die eine Druckeinheit (8) zum Regelns des Drucks des Schmiermittels (5) und eine mit der Druckeinheit (8) verbundene Steuerung umfasst, welche zum Steuern des Betriebs des Lagers (2) als hydrodynamisches und als hydrostatisches Lager ausgelegt ist, **dadurch gekennzeichnet, dass** die Druckeinheit (8) ferner so ausgelegt ist, dass sie Steifigkeit und Dämpfung der Turbinen- und Antriebsstrangkomponenten durch Einstellen des Drucks des Ölfilms einstellt, die von dem Lagerschmiermittel (7) bereitgestellt wird, so dass sich eine Eigenfrequenz und ein dynamisches Verhalten der Turbinen- und Antriebsstrangkomponenten ändert.

5. Windturbine nach Anspruch 4, wobei die Steuerung (10) Eingangswerte für Ist-Belastung und Ist-Leistung der Turbine, Lager- und Schmiermittelzustand und/oder Betriebs- und Wartungszustand umfasst und so ausgelegt ist, dass sie auf der Grundlage der Eingangswerte einen Ausgangswert für die Druckeinheit (8) erzeugt.

6. Windturbine nach Anspruch 4 oder 5, die einen Energiespeicher mit einem Druckbehälter (16) für das Schmiermittel (5) umfasst.

7. Windturbine nach mindestens einem der Ansprüche 4 bis 6, die eine Temperatureinheit (9) zum Regeln der Temperatur des Lagers (2) umfasst, wobei die Temperatureinheit (9) mit der Steuerung (10) verbunden ist.

8. Windturbine nach mindestens einem der Ansprüche 4 bis 7, die einen Sensor (11) zum Messen von Druck, Temperatur und/oder Filmdicke des Schmiermittels (5) in dem Lager (2) umfasst.

9. Windturbine nach Anspruch 8, wobei der Sensor (11) in dem Bereich eines Schmiermitteleinlasses (20) des Lagers (2) angeordnet ist.

## Revendications

1. Procédé de commande d'une turbine éolienne (1) dotée d'un palier lisse/glissant (2) et d'un moyen de lubrification de palier (7), comprenant les étapes consistant à :
- faire fonctionner le palier (2) comme un palier hydrodynamique (HD) en fonctionnement normal ; et
- faire fonctionner le palier (2) comme un palier hydrostatique (HS) lorsque le frottement du palier (2) atteint un seuil,
dans lequel la rigidité et l'amortissement des composants de la turbine et de la ligne d'entraînement sont réglés en réglant la pression dans un film d'huile fourni par le moyen de lubrification de palier (7), changeant ainsi une fréquence propre et une réponse dynamique des composants de la turbine et de la ligne d'entraînement.

2. Procédé selon la revendication 1, dans lequel, pour le fonctionnement hydrostatique, la lubrification du palier (2) est mise sous pression et/ou la température du palier (2) est commandée.

3. Procédé selon la revendication 1 ou 2, dans lequel le frottement du palier (2) est déterminé en mesurant la pression, la température et/ou l'épaisseur de film du palier (2).

4. Turbine éolienne pour mettre en oeuvre un procédé selon l'une des revendications 1 à 3, dotée d'un palier lisse/glissant (2) et d'un lubrifiant de palier (5), comprenant une unité de pression (8) pour commander la pression du lubrifiant (5) et un dispositif de commande relié à l'unité de pression (8), adapté à commander le fonctionnement du palier (2) comme un palier hydrodynamique et comme un palier hydrostatique, **caractérisée en ce que** l'unité de pression (8) est en outre adaptée à régler la rigidité et l'amortissement des composants de la turbine et de la ligne d'entraînement en réglant la pression dans le film d'huile fourni par le moyen de lubrification de palier (7), changeant ainsi une fréquence propre et une réponse dynamique des composants de la turbine et de la ligne d'entraînement.

5. Turbine éolienne selon la revendication 4, dans laquelle le dispositif de commande (10) comprend des entrées pour la charge et la production réelles de la turbine, les conditions du palier et du lubrifiant et/ou l'état de fonctionnement et de maintenance, et dans laquelle le dispositif de commande (10) est adapté à générer une sortie pour l'unité de pression (8) sur la base des entrées.

6. Turbine éolienne selon la revendication 4 ou 5, comprenant un stockage d'énergie avec un réservoir de pression (16) pour le lubrifiant (5).

7. Turbine éolienne selon au moins l'une des revendications 4 à 6, comprenant une unité de température (9) pour commander la température du palier (2), laquelle unité de température (9) est reliée au dispositif de commande (10).

8. Turbine éolienne selon au moins l'une des revendications 4 à 7, comprenant un capteur (11) pour mesurer la pression, la température et/ou l'épaisseur de film du lubrifiant (5) dans le palier (2).

9. Turbine éolienne selon la revendication 8, dans laquelle le capteur (11) est disposé dans la zone d'une entrée de lubrifiant (20) du palier (2).
